# EUROPEAN PATENT SPECIFICATION

(11) **EP 1 596 075 B1**
(45) Date of publication and mention of the grant of the patent: **22.08.2007**
(21) Application number: 05003984.1
(22) Date of filing: 24.02.2005
(51) Int. Cl.: F16B 5/02

(54) **Three-dimensionally adjustable mounting device**
Dreidimensional justierbare Befestigungsvorrichtung
Dispositif de fixation ajustable dans les trois dimensions

(30) Priority: 12.05.2004 JP 2004142761
(43) Date of publication of application: 16.11.2005
(73) Proprietor: JAMCO CORPORATION, Mitaka, Tokyo (JP)
(72) Inventor: Kamiyama, Yukio, Mitaka Tokyo (JP)
(74) Representative: TER MEER - STEINMEISTER & PARTNER GbR

(56) References cited:
- EP-A- 0 648 943
- GB-A- 810 805
- US-A1- 2003 202 839
- PATENT ABSTRACTS OF JAPAN vol. 1998, no. 12, 31 October 1998 (1998-10-31) & JP 10 184790 A (ORII CORP), 14 July 1998 (1998-07-14)

## Description

### BACKGROUND OF THE INVENTION

### Field of the invention

The present invention relates to amounting device for fixing a module (separately formed equipment and the like) on a floor surface of an aircraft.

### Description of the related art

Attachment tools such as bolts and nuts are used to fix a module such as a galley on a floor surface of the aircraft. Along with the increase in size of the aircraft, the area of the floor surface has enlarged, and thus the tolerance such as flatness of the floor surface has also increased.

Conventionally, in order to fix the module on the floor having this large tolerance, bushes etc. are layered to adjust the height thereof.

In order to correspond to large-scale modules such as galleys, the mounting device must be capable of providing adj ustment means not only in the height direction perpendicular to the floor surface but also in the planar direction parallel to the floor surface.

The U.S. 2003/0202839 A1 discloses an adjustable positioner for stably securing an apparatus to a floor. The positioner has positioning holes for receiving therethrough anchor bolts implanted upright in the floor. The positioning holes have a diameter substantially larger than that of the anchor bolt, the positioner comprising a first cylindrical bushing member having at an eccentric position a through hole of a diameter for rotatably fitting one of the anchor bolts, and a second cylindrical bushing member having at an eccentric position a hole of a diameter for rotatably fitting the first bushing member. Thus, by rotating the second bushing member on the one hand and the first bushing member inside the second bushing member, the position of the through hole receiving the related anchor bolt may be adjusted in a plane perpendicular to the axis of the bushings.

### SUMMARY OF THE INVENTION

The present invention provides a mounting device for attaching a module to the aircraft that satisfies the above-described demands.

The mounting device according to the present invention comprises, asbasicmeans, a first mount member having an external screw portion, which is fixable to the floor surface to protrude above the floor surface; a second mount member having an internal screw portion that engages to the external screw portion of the first mount member, and a screw hole for receiving a fastening bolt; a first bush member having a cylindrical portion to be inserted into a mounting hole formed to the module, and an inner bore formed so that its axis line is eccentric to the cylindrical portion; a second bush member having a cylindrical portion inserted to the inner bore of the first bush member, and an inner bore formed so that its axis line is eccentric to the cylindrical portion; and a fastening bolt inserted to the inner bore of the second bush member and engaged to the screw hole of the second mount member.

According to further aspects of the invention, the degree of eccentricity of the first bush member and that of the second bush member are equal, and the second mount member, the first bush member and the second bush member have parallel planes formed to their outer circumference surfaces.

By the arrangement described above, the mounting device of the present invention enables to adjust the position of the module along three-dimensional directions with respect to the floor surface of the aircraft and to fix the module on the floor surface.

### BRIEF DESCRIPTION OF THE DRAWINGS

FIG. 1 is a perspective view showing the general structure of a mounting device according to the present invention;
FIG. 2 is an overall cross-sectional view showing the general structure of the mounting device according to the present invention;
FIG. 3 is an overall cross-sectional view showing the general structure of the mounting device according to the present invention;
FIG. 4 is a detailed view of a first mount member;
FIG. 5 is a detailed view of a second mount member;
FIG. 6 is a detailed view of a first bush member;
FIG. 7 is a detailed view of a second bush member;
FIG. 8 is an explanatory view showing the adjustment operation according to the mounting device of the present invention;
FIG. 9 is an explanatory view showing the adjustment operation according to the mounting device of the present invention; and
FIG. 10 is an explanatory view showing the adjustment operation according to the mounting device of the present invention.

### DETAILED DESCRIPTION OF THE PREFERRED EMBODIMENTS

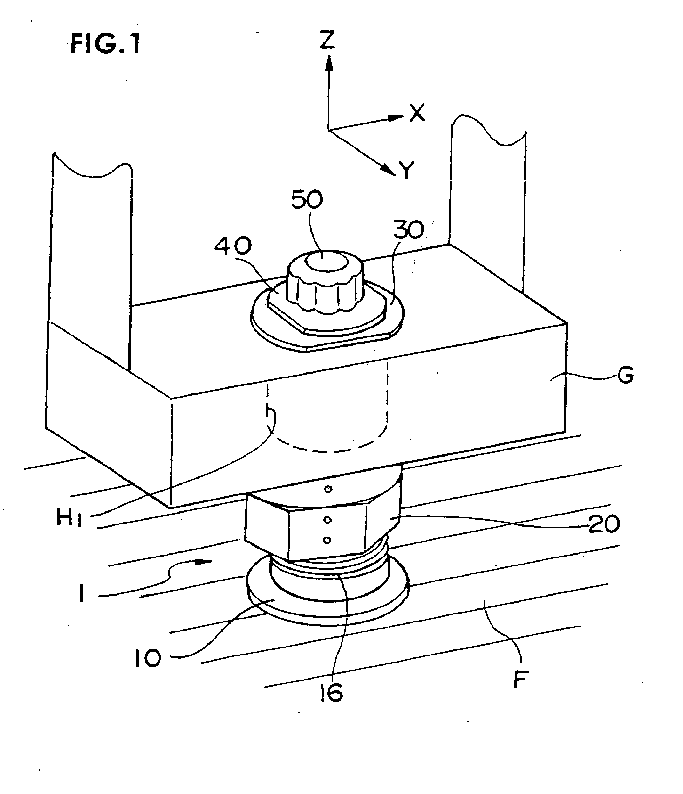

FIG. 1 is an explanatory view showing the general structure of the mounting device according to the present invention.

A mounting device 1 is a device for fixing a module G such as a galley on a floor surface F of the aircraft, having a first mount member 10, and a second mount member 20 that engages to a screw portion 16 of the first mount member 10.

A module G is mounted on top of a second mount member 20. A first bush member 30 is inserted to a hole H₁ formed to the module G and a second bush member 40 is inserted to the inner side of the first bush member 30.

By rotating the second mount member 20, the position of module G can be adjusted in a Z-axis direction, which is a perpendicular (up-down) direction, by a screw mechanism. The first bush member 30 and the second bush member 40 have outer circumference surfaces that are eccentric to the rotation axis.

Thus, by rotating the first bush 30 and the second bush 40 around the rotation axis, it is possible to adjust the position of the module G within a plane formed by the X-axis and the Y-axis according to the degree of eccentricity.

After completing the positional adjustment, the bolt 50 is tightened to fix the module G.

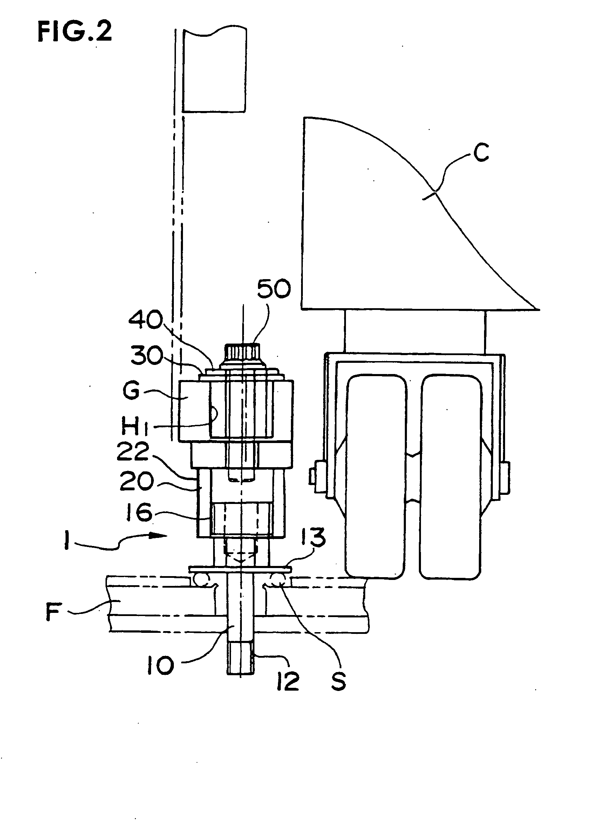

FIG. 2 is a cross-sectional view of the mounting device 1.

A screw portion 12 is formed to an underfloor portion of the first mount member 10 arranged to pass through the floor surface F of the aircraft, which is engaged with and fixed to a nut hole formed to the aircraft. The first mount member 10 has a flange, and a seal member S can be interposed between the flange 13 and the floor surface F if necessary.

The second mount member 20 threadably mounted on an external screw portion 16 of the first mount member 10 has a hexagonal surface 22 that can be rotated using a wrench or the like.

The module G mounted on top of the second mount member has a mounting hole H₁. The first bush member 30 is inserted to the mounting hole H₁, and the second bush member 40 is inserted to the inner side of the first bush member 30.

A fastening bolt 50 is inserted to a center hole of the second bush member 40.

The second bush member 40 has a cylindrical portion that is eccentric to the center hole. The first bush member 30 having an inner bore into which the cylindrical portion of the second bush member 40 is inserted also has a cylindrical surface that is eccentric to the bore.

The degrees of eccentricity of the cylindrical surfaces with respect to the bores of the first and second bush members are the same.

Thus, by rotating the first and second bush members 30 and 40, it is possible to adjust the position of the mounting hole H₁ of the module G along a plane with respect to the axial line of the fastening bolt 50.

Reference C of FIG. 2 shows a portion of a service cart stored in the galley.

It is preferable that the clearance between the mounting portion of module G (in this case, the galley) and the storing position of the service cart C is small.

According to the mounting device 1 of the present invention, the module G can be fixed adjustably to even a narrow space.

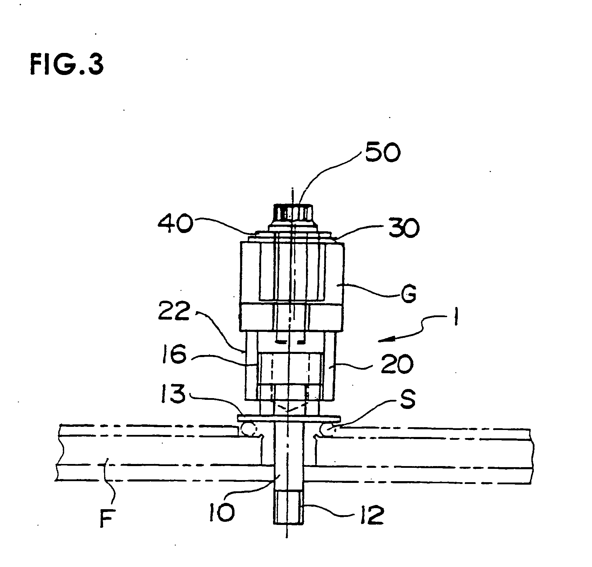

FIG. 3 is a cross-sectional view showing the overall structure of the mounting device 1 according to the present invention.

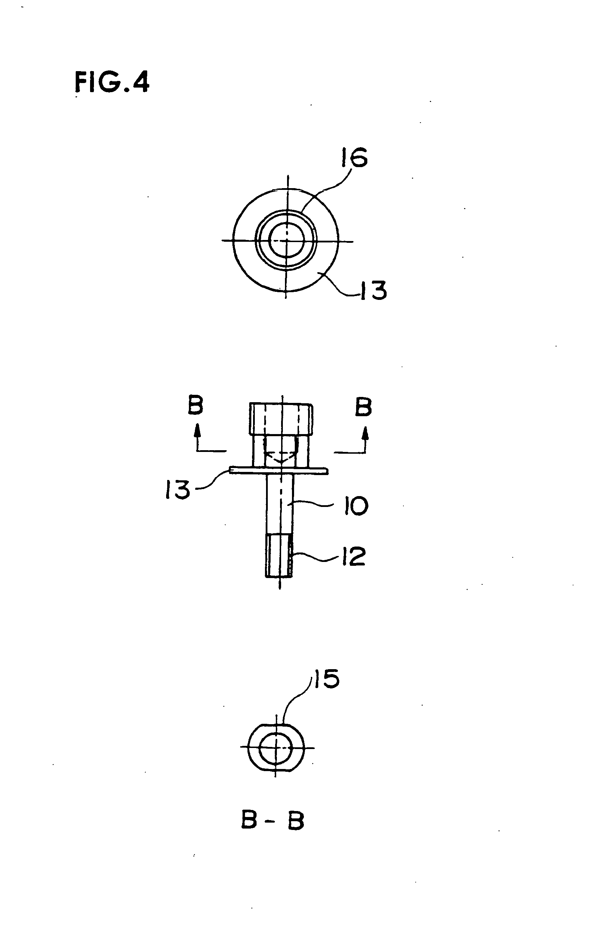

FIG. 4 is an explanatory view showing the details of the first mount member 10.

The first mount member 10 has an external screw portion 12 that can be threadably mounted on a nut member on the aircraft, which can be fixed to the aircraft using a wrench or the like utilizing parallel planes 15.

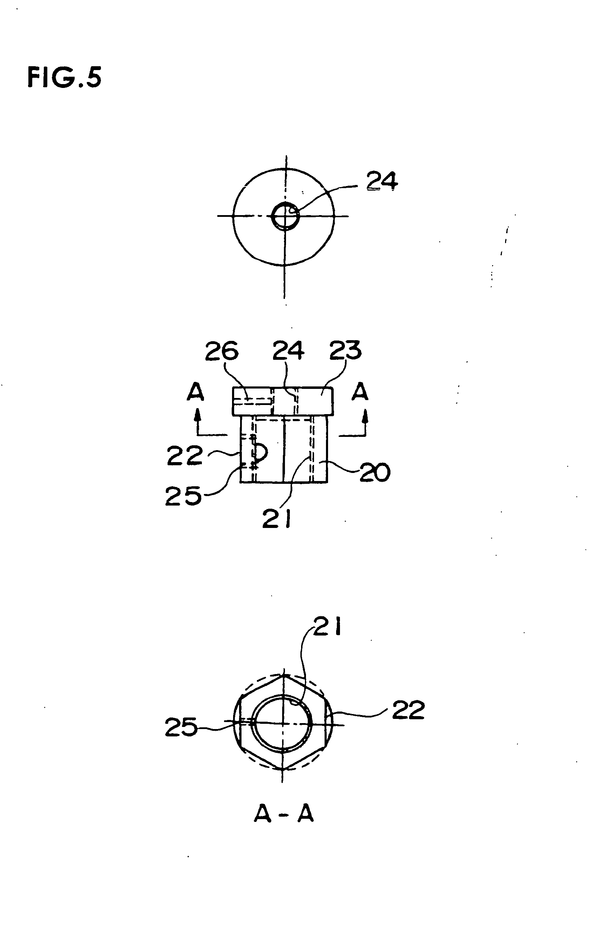

FIG. 5 is an explanatory view showing the details of the second mount member 20.

The second mount member 20 has an internal screw portion 21 that can be threadably mounted on the external screw portion 16 of the first mount member 10.

The second mount member 20 has a hexagonal column 22 and a cylindrical portion 23, and the member 20 is threaded to the first mount member 10 using the hexagonal column 22. Resin members 25 are inserted to two portions of the hexagonal column 22, adopting a structure to prevent loosening of the thread engagement.

A screw hole 24 is provided at the center of the cylindrical portion 23 to which a fastening bolt is to be engaged. A resin member 26 is also inserted to this screw hole 24.

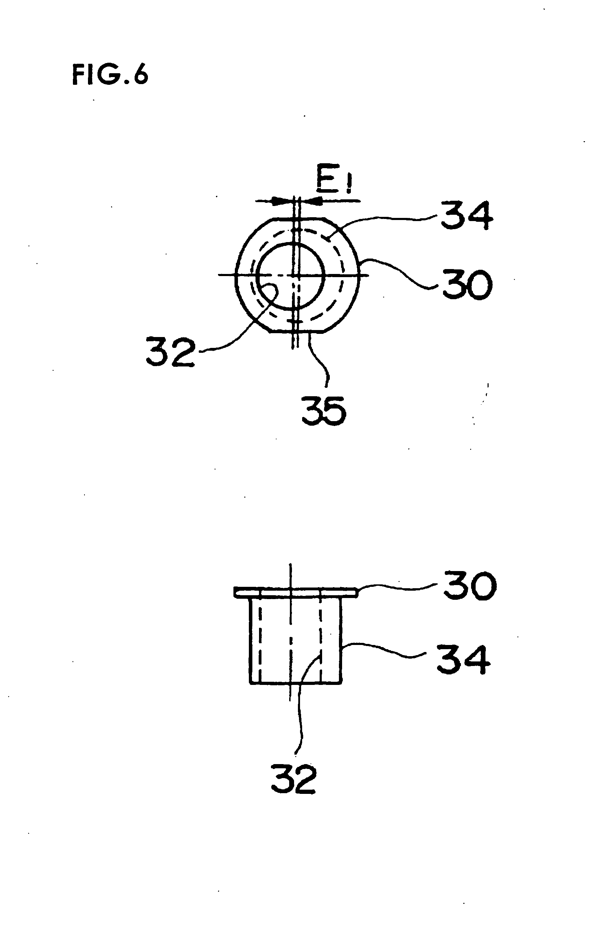

FIG. 6 is an explanatory view showing the details of the first bush member 30.

The first bush member 30 has a flange portion and a cylindrical portion 34 formed under the flange portion. The flange portion has parallel planes 35 formed thereto, which are used for rotating the first bush member 30.

A cylindrical bore 32 is formed to the inner side of the cylindrical portion 34. The axis line of the cylindrical portion 34 is eccentric away from the axis line of the cylindrical bore 32 by a distance E₁.

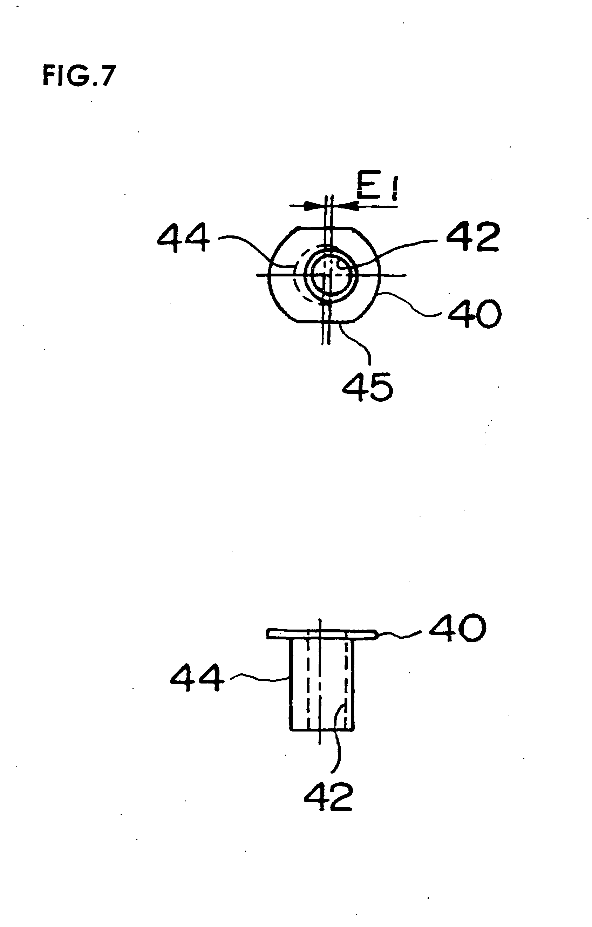

FIG. 7 is an explanatory view showing the details of the second bush member 40.

The second bush member 40 has a flange portion and a cylindrical portion 44 formed under the flange portion. The flange portion has parallel planes 45 formed thereto, which are used for rotating the second bush member 40.

An inner bore 42 is formed to the inner side of the cylindrical portion 44. The axis line of the cylindrical portion 44 is eccentric away from the axis line of the inner bore 42 by a distance E₁.

The outer diameter size of the cylindrical portion 44 is determined so that it can fit loosely in the inner diameter of the cylindrical bore 32 of the first bush member 30.

The inner diameter size of the inner bore 42 is set so that it allows the outer diameter of the fastening bolt 50 to be fit loosely thereto.

Therefore, by rotating the first bush member 30 and the second bush member 40, the axial position of the mounting hole H₁ of module G can be adjusted with respect to the axis line of the fastening bolt 50.

The adjustable amount is within the range of degree of eccentricity E₁ on the X-Y plane, using the axis line of the fastening bolt 50 as reference.

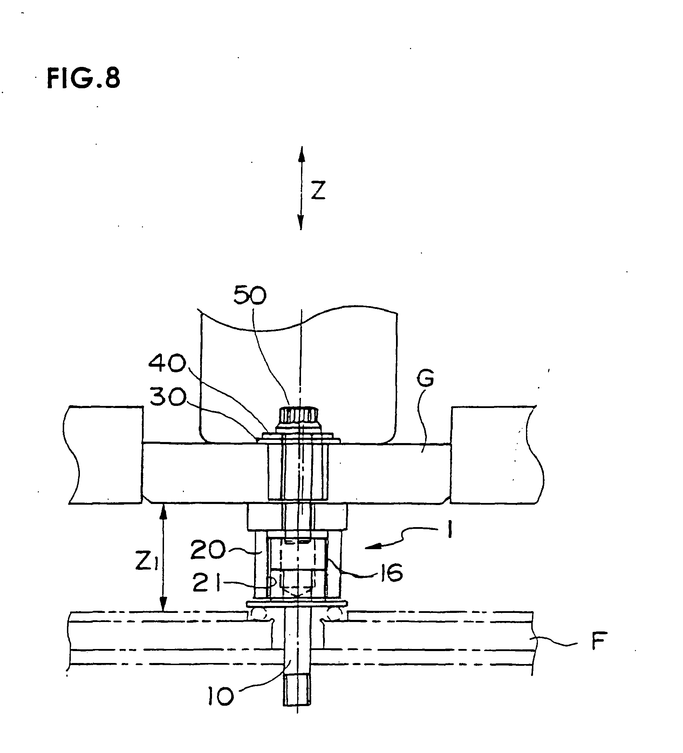

FIGS. 8 through 10 are explanatory views showing the height adjustment operation of the module according to the mounting device 1 of the present invention.

FIG. 8 shows the state in which the screw portion 21 of the second mount member 20 is engaged to a maximum extent to the screw portion 16 of the first mount member 10 fixed to the floor surface F of the aircraft.

In this state, the height Z₁ of the module G, which is the galley, from the floor surface F is at minimum value.

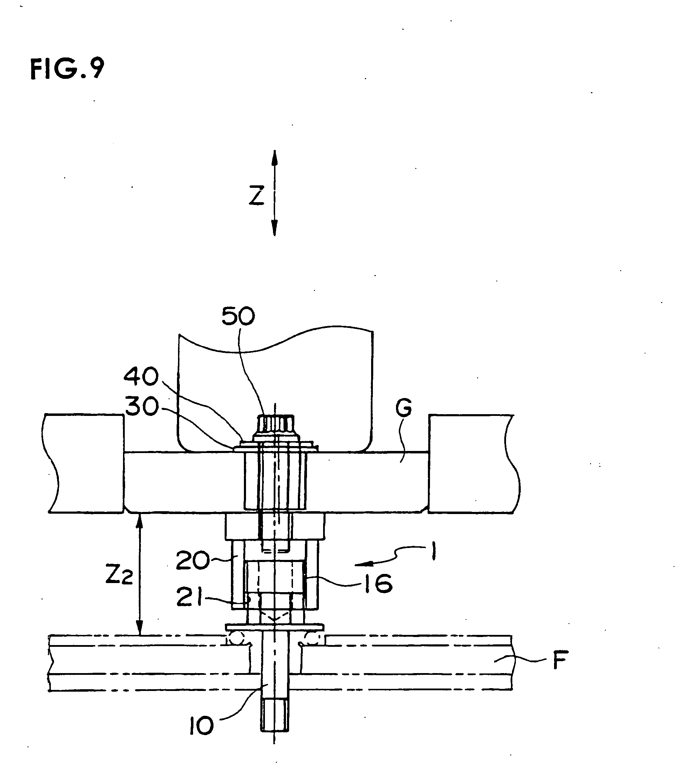

In FIG. 9, the second mount member 20 is rotated with respect to the screw portion 16 of the first mount member 10, so that the second mount member 20 is adjusted to a position separated from the first mount member 10 using the screw portion 21.

In this state, the height Z₂ of the module G from the floor surface F is greater than Z₁.

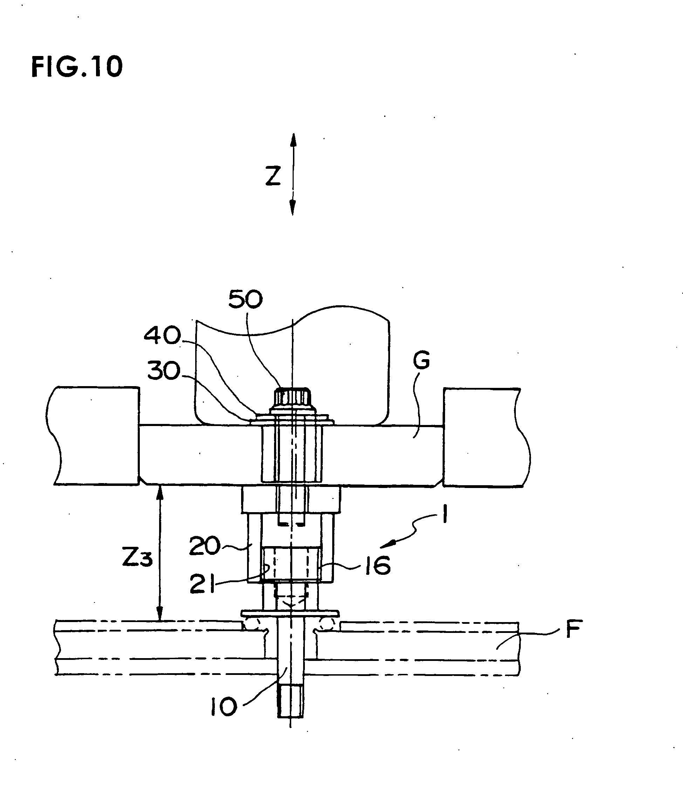

In FIG. 10, the second mount member 20 is further rotated so that the second mount member 20 is adjusted to a position separated to a maximum extent from the first mount member 10.

In this state, the height Z₃ from the floor surface F is at maximum value.

## Claims

1. A module mounting device for fixing a module (G) on a floor surface (F) of an aircraft, the mounting device comprising:
a first bush member (30) having a cylindrical outer portion (34) for inserting into a mounting hole (H1) formed to the module(G), and an inner bore (32) formed so that its axis line is eccentric to the cylindrical outer portion (34) of the first bush member (30);
a second bush member (40) having a cylindrical outer portion (44) inserted to the inner bore (32) of the first bush member (30), the second bush member (40) having an inner bore (42) formed so that its axis line is eccentric to the cylindrical outer portion (44) of the second bush member (40) ;
a first mount member (10) having an external screw portion which is fixable to the floor surface (F) to protrude above the floor surface;
**characterized by**
a second mount member (20) formed as a nut and having an internal screw portion that engages to the external screw portion of the first mount member (10), and a screw hole (24) having an inner thread;
a fastening bolt (50) inserted to the inner bore of the second bush member (40) and engaged to the screw hole (24) of the second mount member (20) ; and
wherein the position of the module (G) is adjustable along the axial direction of the mount members (10,20) by rotating the second mount member (20) with respect to the first mount member (10) and within the plane perpendicular to the axial direction of the mount member by rotating the first bush member (30) and the second bush member (40) around the rotation axis.

2. The module mounting device for an aircraft according to claim 1, wherein the degree of the eccentricity of the first bush member (30) and that of the second bush member (40) are equal.

3. The module mounting device for an aircraft according to claim 1, wherein the second mount member (20), the first bush member (30) and the seond bush member (40) have parallel planes (15,35,45) formed to their outer circumference surfaces.

## Patentansprüche

1. Modulbefestigungseinrichtung zum Befestigen eines Moduls (G) auf der Bodenfläche (F) eines Flugzeugs, welche Befestigungseinrichtung umfasst:
ein erstes Buchsenglied (30) mit einem zylindrischen äußeren Bereich (34) zum Einfügen in eine Montagebohrung (H1), die an dem Modul (G) ausgebildet ist, und eine innere Bohrung (32), die so hergestellt ist, dass ihre Achslinie exzentrisch zu dem zylindrischen äußeren Bereich (34) des ersten Buchsengliedes (30) liegt;
ein zweites Buchsenglied (40) mit einem zylindrischen äußeren Bereich (44), der eingefügt ist in die innere Bohrung (32) des ersten Buchsengliedes (30), welches zweite Buchsenglied eine innere Bohrung (42) aufweist, die so hergestellt, dass ihre Achslinie exzentrisch zu dem zylindrischen äußeren Bereich (44) des zweiten Buchsengliedes (40) liegt;
ein erstes Befestigungsglied (10) mit einem äußeren Gewindebereich, das an der Bodenfläche (F) befestigbar ist und über die Bodenfläche hinausragt;
**gekennzeichnet durch**
ein zweites Befestigungsglied (20), das als Mutter ausgebildet ist und einen Innengewindeabschnitt aufweist, der mit dem Außengewindeabschnitt des ersten Befestigungsgliedes (10) zusammenwirkt, und eine Gewindebohrung (24) mit einem inneren Gewinde;
ein Befestigungsbolzen (50), der in die innere Bohrung des zweiten Buchsengliedes (40) eingefügt ist und mit der Gewindebohrung (24) des zweiten Befestigungsgliedes (20) zusammenwirkt,
wobei die Position des Moduls (G) einstellbar ist entlang der Achsrichtung der Befestigungsglieder (10,20) **durch** Drehung des zweiten Befestigungsgliedes (20) in Bezug auf das erste Befestigungsglied (10) und in Bezug auf die Ebene senkrecht zu der Achsrichtung des Befestigungsgliedes **durch** Drehung des ersten Buchsengliedes (30) und des zweiten Buchsengliedes (40) um die Rotationsachse.

2. Modulbefestigungseinrichtung für ein Flugzeug gemäß Anspruch 1, wobei der Grad der Exzentrizität des ersten Buchsengliedes (30) und des zweiten Buchsengliedes (40) gleich sind.

3. Modulbefestigungseinrichtung nach Anspruch 1, wobei das zweite Befestigungsglied (20), das erste Buchsenglied (30) und das zweite Buchsenglied (40) parallele Ebenen (15,35,45) auf ihrer äußeren Umfangsfläche aufweisen.

## Revendications

1. Dispositif de montage de module pour fixer un module (G) sur une surface de plancher (F) d'un avion, le dispositif de montage comprenant :
un premier élément de coussinet (30) comportant une partie extérieure cylindrique (34) pour l'insertion dans un trou de montage (H1) formé sur le module (G), et un perçage intérieur (32) formé de telle sorte que sa ligne d'axe soit excentrée par rapport à la partie extérieure cylindrique (34) du premier élément de coussinet (30) ;
un deuxième élément de coussinet (40) comportant une partie extérieure cylindrique (44) insérée dans le perçage intérieur (32) du premier élément de coussinet (30), le deuxième élément de coussinet (40) comportant un perçage intérieur (42) formé de telle sorte que sa ligne d'axe soit excentrée par rapport à la partie extérieure cylindrique (44) du deuxième élément de coussinet (40) ;
un premier élément de montage (10) comportant une partie de vis extérieure qui peut être fixée à la surface de plancher (F) de façon à faire saillie au-dessus de la surface de plancher ;
**caractérisé par** :
un deuxième élément de montage (20) formé sous la forme d'un écrou et comportant une partie de vis intérieure qui vient en prise avec la partie de vis extérieure du premier élément de montage (10), et un trou de vis (24) comportant un filetage intérieur ;
un boulon de fixation (50) inséré dans le perçage intérieur du deuxième élément de coussinet (40) et venant en prise avec le trou de vis (24) du deuxième élément de montage (20) ; et
dans lequel la position du module (G) peut être réglée le long de la direction axiale des éléments de montage (10, 20) grâce à la rotation du deuxième élément de montage (20) par rapport au premier élément de montage (10), et à l'intérieur du plan perpendiculaire à la direction axiale de l'élément de montage grâce à la rotation du premier élément de coussinet (30) et du deuxième élément de coussinet (40) autour de l'axe de rotation.

2. Dispositif de montage de module pour un avion selon la revendication 1, dans lequel le degré de l'excentricité du premier élément de coussinet (30) et celui du deuxième élément de coussinet (40) sont égaux.

3. Dispositif de montage de module pour un avion selon la revendication 1, dans lequel le deuxième élément de montage (20), le premier élément de coussinet (30) et le deuxième élément de coussinet (40) ont des plans parallèles (15, 35, 45) formés sur leurs surfaces circonférentielles extérieures.
